# FASCICULE DE BREVET EUROPEEN

(11) **EP 3 135 852 B1**
(45) Date de publication et mention de la délivrance du brevet: **14.03.2018**
(21) Numéro de dépôt: 16186250.3
(22) Date de dépôt: 30.08.2016
(51) Int. Cl.: E06B 9/72, H02K 7/14, H02G 3/22, H02G 15/007, H02G 15/013, H02K 5/22

(54) **BOUCHON AVEC UN SYSTÈME GUIDE-CÂBLE D'UN ACTIONNEUR ÉLECTROMÉCANIQUE TUBULAIRE POUR UN ARBRE D'ENROULEMENT**
ENDKAPPE MIT KABELFÜHRUNG FÜR DEN ROHRMOTOR EINER WICKELWELLE
END CAP WITH CABLE GUIDE FOR THE TUBULAR MOTOR OF A WINDING SHAFT

(30) Priorité: 31.08.2015 FR 1558052
(43) Date de publication de la demande: 01.03.2017
(73) Titulaire: SOMFY ACTIVITES SA, 74300 Cluses (FR)
(72) Inventeur: BRONDEX, Adrien, 74700 Domancy (FR)
(74) Mandataire: Lavoix

(56) Documents cités:
- FR-A1- 2 891 001
- FR-A1- 2 989 849

## Description

La présente invention concerne un actionneur électromécanique tubulaire.

La présente invention concerne également une installation domotique de fermeture ou de protection solaire comprenant un écran enroulable sur un tube d'enroulement entraîné en rotation par un tel actionneur électromécanique tubulaire.

De manière générale, la présente invention concerne le domaine des dispositifs d'occultation comprenant un dispositif d'entraînement motorisé mettant en mouvement un écran entre au moins une première position et une deuxième position.

Un dispositif d'entraînement motorisé comprend un actionneur électromécanique tubulaire d'un élément mobile de fermeture, d'occultation ou de protection solaire, tel qu'un volet, une porte, une grille, un store ou tout autre matériel équivalent, appelé par la suite écran.

On connaît déjà le document FR 2 923 329 A1 qui décrit un actionneur électromécanique tubulaire pour une installation domotique de fermeture ou de protection solaire comprenant un carter, un moteur électrique, un élément d'obturation d'une extrémité du carter et un câble. L'élément d'obturation comprend un logement et un dispositif de maintien en position du câble.

Une partie du câble est disposée à l'intérieur du logement de l'élément d'obturation. Le logement de l'élément d'obturation débouche en partie au travers d'une paroi latérale, de sorte à former une ouverture sur la périphérie de l'élément d'obturation. Le dispositif de maintien en position du câble comprend un obturateur monté à l'intérieur du logement de l'élément d'obturation, de sorte à maintenir en position le câble dans le logement de l'élément d'obturation, suite à l'insertion de l'obturateur dans l'ouverture ménagée sur la périphérie de l'élément d'obturation. L'obturateur est inséré dans l'ouverture ménagée sur la périphérie de l'élément d'obturation par un mouvement de pivotement autour d'un élément de pivot ménagé sur une paroi interne du logement de l'élément d'obturation. Le mouvement de pivotement de l'obturateur à l'intérieur de l'ouverture ménagée sur la périphérie de l'élément d'obturation est mis en oeuvre suivant une direction orthogonale à un axe longitudinal de l'élément d'obturation.

Cependant, cet actionneur électromécanique tubulaire présente l'inconvénient de pouvoir uniquement maintenir en position un câble d'une section prédéterminée en fonction du dimensionnement du passage de câble ménagé entre les parois de l'élément d'obturation et les parois de l'obturateur obstruant l'ouverture ménagée sur la périphérie de l'élément d'obturation.

Dans le cas où la section du câble est supérieure à la section du passage de câble ménagée entre l'obturateur et l'élément d'obturation, soit l'obturateur ne peut pas être monté dans l'ouverture ménagée sur la périphérie de l'élément d'obturation, soit l'obturateur peut être monté en force dans l'ouverture ménagée sur la périphérie de l'élément d'obturation avec le risque d'endommager le câble.

Dans le cas où la section du câble est inférieure à la section du passage de câble ménagée entre l'obturateur et l'élément d'obturation, le câble n'est pas maintenu en position dans le passage de câble ménagé par les parois internes de l'obturateur et les parois internes de l'élément d'obturation.

De cette manière, le passage de câble ménagé entre l'obturateur et l'élément d'obturation ne peut être utilisé que pour un seul diamètre de câble. Et le passage de câble ménagé entre l'obturateur et l'élément d'obturation ne peut accueillir qu'un seul câble.

En outre, le nombre de références de l'élément d'obturation dépend du nombre de diamètres des câbles pouvant être reliés électriquement à l'actionneur électromécanique tubulaire.

Par conséquent, le coût de gestion de ces différentes références par le fabricant d'actionneurs électromécaniques tubulaires est onéreux.

Des problèmes analogues se posent avec les matériels connus de FR-A-2 989 849 et FR-A-2 891 001.

La présente invention a pour but de résoudre les inconvénients précités et de proposer un actionneur électromécanique tubulaire, ainsi qu'une installation domotique de fermeture ou de protection solaire comprenant un tel actionneur électromécanique tubulaire, permettant de maintenir en position un ou plusieurs câbles de diamètre quelconque passant au travers d'un logement d'un élément d'obturation de l'actionneur électromécanique tubulaire.

A cet effet, la présente invention vise, selon un premier aspect, un actionneur électromécanique tubulaire pour une installation domotique de fermeture ou de protection solaire comprenant :
- un carter,
- un moteur électrique,
- un élément d'obturation d'une extrémité du carter,
- au moins un câble,
où l'élément d'obturation comprend :
o un logement,
o un dispositif de maintien en position dudit au moins un câble,
où au moins une partie dudit au moins un câble est disposée à l'intérieur du logement de l'élément d'obturation,
où le dispositif de maintien en position dudit au moins un câble comprend un élément rotatif monté à l'intérieur du logement de l'élément d'obturation, de sorte à maintenir en position ledit au moins un câble dans le logement de l'élément d'obturation, suite à un mouvement de rotation de l'élément rotatif à l'intérieur du logement de l'élément d'obturation autour d'un axe de rotation, l'axe de rotation de l'élément rotatif étant parallèle ou confondu avec un axe longitudinal de l'élément d'obturation.

Selon l'invention, l'élément rotatif est de forme cylindrique et comprend une fente de passage, de sorte à permettre une première sortie dudit au moins un câble selon une direction axiale par rapport à l'axe longitudinal de l'élément d'obturation au moyen de la fente de passage et une deuxième sortie dudit au moins un câble selon une direction radiale par rapport à l'axe longitudinal de l'élément d'obturation.

Ainsi, l'élément rotatif du dispositif de maintien en position du ou des câble(s) monté(s) à l'intérieur du logement de l'élément d'obturation permet de maintenir en position un ou plusieurs câbles de section quelconque passant au travers du logement de l'élément d'obturation de l'actionneur électromécanique tubulaire.

De cette manière, l'élément d'obturation présente un dispositif de maintien en position d'au moins un câble, compatible pour un ensemble d'actionneurs électromécaniques tubulaires ayant un ou plusieurs câbles qui peuvent être de diamètres différents.

En outre, le maintien en position dudit au moins un câble au moyen de l'élément rotatif monté à l'intérieur du logement de l'élément d'obturation permet d'éviter d'endommager ledit au moins un câble.

Par ailleurs, l'élément d'obturation peut être utilisé pour maintenir en position un ou plusieurs câbles de différentes sections, de sorte à standardiser l'élément d'obturation pour un ensemble d'actionneurs électromécaniques tubulaires.

De cette manière, la gestion et l'industrialisation des actionneurs électromécaniques tubulaires par un fabricant sont simplifiées et moins onéreuses.

L'élément rotatif permet de maintenir en position le ou les câbles soit selon une direction axiale, soit selon direction radiale par rapport à l'axe longitudinal de l'élément d'obturation, en fonction de l'assemblage de l'actionneur électromécanique sur le support.

Avantageusement, l'élément rotatif est monté dans le logement de l'élément d'obturation au moyen d'éléments de fixation par encliquetage élastique.

Selon une caractéristique préférée de l'invention, l'élément rotatif est monté libre en rotation, autour de son axe de rotation, à l'intérieur du logement de l'élément d'obturation.

En pratique, l'élément rotatif du dispositif de maintien en position dudit au moins un câble est positionné à l'intérieur du logement de l'élément d'obturation par la mise en appui d'une paroi de l'élément rotatif contre une butée du logement de l'élément d'obturation.

En pratique, la fente de passage ménagée dans l'élément rotatif débouche, d'une part, sur le contour circulaire de l'élément rotatif et, d'autre part, sur les deux faces parallèles de l'élément rotatif.

Avantageusement, lorsque ledit au moins un câble est disposé selon la première sortie, c'est-à-dire selon la direction axiale par rapport à l'axe longitudinal de l'élément d'obturation, l'élément rotatif est déplaçable d'une première position, où le bord de la fente de passage ménagée dans l'élément rotatif n'exerce aucune pression sur ledit au moins un câble, vers une deuxième position, où une partie du bord de la fente de passage ménagée dans l'élément rotatif exerce une pression sur ledit au moins un câble.

Selon une autre caractéristique préférée de l'invention, l'élément d'obturation comprend une paroi formant le logement à l'intérieur duquel est disposé l'élément rotatif, où la paroi de l'élément d'obturation comprend une ouverture de passage dudit au moins un câble, de sorte à permettre la deuxième sortie dudit au moins un câble selon une direction radiale par rapport à l'axe longitudinal de l'élément d'obturation.

Préférentiellement, lorsque ledit au moins un câble est disposé selon la deuxième sortie, c'est-à-dire selon la direction radiale par rapport à l'axe longitudinal de l'élément d'obturation, l'élément rotatif est déplaçable d'une troisième position, où la fente de passage ménagée dans l'élément rotatif est alignée avec l'ouverture de passage ménagée dans la paroi de l'élément d'obturation, vers une quatrième position, où la fente de passage ménagée dans l'élément rotatif est décalée angulairement autour de l'axe de rotation de l'élément rotatif par rapport à l'ouverture de passage ménagée dans la paroi de l'élément d'obturation.

La présente invention vise, selon un deuxième aspect, une installation domotique de fermeture ou de protection solaire comprenant un écran enroulable sur un tube d'enroulement entraîné en rotation par un actionneur électromécanique tubulaire conforme à l'invention.

Cette installation domotique présente des caractéristiques et avantages analogues à ceux décrits précédemment en relation avec l'actionneur électromécanique tubulaire tel que mentionné ci-dessus.

D'autres particularités et avantages de l'invention apparaîtront encore dans la description ci-après.

Aux dessins annexés, donnés à titre d'exemples non limitatifs :
- la figure 1 est une vue schématique en coupe transversale d'une installation domotique conforme à un mode de réalisation de l'invention ;
- la figure 2 est une vue schématique en perspective de l'installation domotique illustrée à la figure 1 ;
- la figure 3 est une vue en coupe schématique partielle de l'installation domotique illustrée aux figures 1 et 2 montrant un actionneur électromécanique tubulaire de l'installation ;
- la figure 4 est une vue schématique en perspective d'un élément d'obturation de l'actionneur électromécanique tubulaire illustré à la figure 3, cet élément d'obturation comprenant un dispositif de maintien en position d'au moins un câble ;
- la figure 5 est une vue analogue à la figure 4 et selon un autre angle, où un élément rotatif du dispositif de maintien en position d'au moins un câble a été ôté ;
- la figure 6 est une vue schématique en perspective de l'élément d'obturation illustré aux figures 4 et 5, où des câbles présentent une sortie selon une direction axiale par rapport à l'axe longitudinal de l'élément d'obturation ;
- les figures 7 et 8 sont des vues schématiques en perspective de l'élément d'obturation illustré aux figures 4 et 5, où des câbles présentent une sortie selon une direction radiale par rapport à l'axe longitudinal de l'élément d'obturation et où l'élément rotatif est dans une position de positionnement des câbles, tel qu'illustré à la figure 7, puis dans une position de blocage des câbles, tel qu'illustré à la figure 8 ; et
- la figure 9 est une vue schématique en perspective d'un élément rotatif du dispositif de maintien en position d'au moins un câble illustré aux figures 4 à 8.

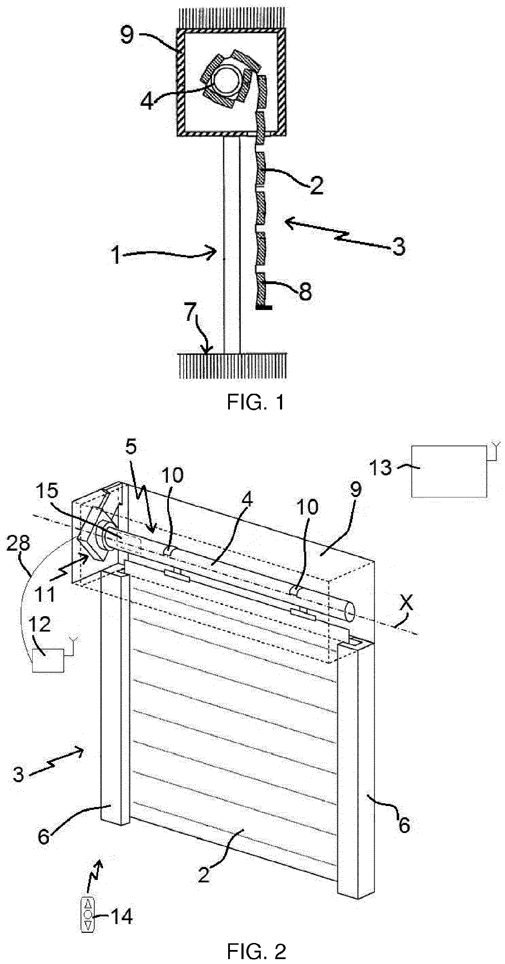

On va décrire tout d'abord, en référence aux figures 1 et 2, une installation domotique conforme à l'invention et installée dans un bâtiment comportant une ouverture 1, fenêtre ou porte, équipée d'un écran 2 appartenant à un dispositif d'occultation 3, en particulier un volet roulant motorisé.

Le dispositif d'occultation 3 peut être un volet roulant, un store en toile ou avec des lames orientables, ou encore un portail roulant. La présente invention s'applique à tous les types de dispositif d'occultation.

On va décrire, en référence aux figures 1 et 2, un volet roulant conforme à un mode de réalisation de l'invention.

L'écran 2 du dispositif d'occultation 3 est enroulé sur un tube d'enroulement 4 entraîné par un dispositif d'entraînement motorisé 5 et mobile entre une position enroulée, en particulier haute, et une position déroulée, en particulier basse.

L'écran 2 mobile du dispositif d'occultation 3 est un écran de fermeture, d'occultation et/ou de protection solaire, s'enroulant sur le tube d'enroulement 4 dont le diamètre intérieur est sensiblement supérieur au diamètre externe d'un actionneur électromécanique 11, de sorte que l'actionneur électromécanique 11 puisse être inséré dans le tube d'enroulement 4, lors de l'assemblage du dispositif d'occultation 3.

Le dispositif d'entraînement motorisé 5 comprend l'actionneur électromécanique 11, en particulier de type tubulaire, permettant de mettre en rotation le tube d'enroulement 4, de sorte à dérouler ou enrouler l'écran 2 du dispositif d'occultation 3.

Le dispositif d'occultation 3 comprend le tube d'enroulement 4 pour enrouler l'écran 2, où, dans l'état monté, l'actionneur électromécanique 11 est inséré dans le tube d'enroulement 4.

De manière connue, le volet roulant, qui forme le dispositif d'occultation 3, comporte un tablier comprenant des lames horizontales articulées les unes aux autres, formant l'écran 2 du volet roulant 3, et guidées par deux glissières latérales 6. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8 en forme de L du tablier 2 du volet roulant 3 contre un bord d'un coffre 9 du volet roulant 3, et la position basse déroulée correspond à la mise en appui de la lame d'extrémité finale 8 du tablier 2 du volet roulant 3 contre un seuil 7 de l'ouverture 1.

La première lame du tablier 2 du volet roulant 3, opposée à la lame d'extrémité, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Le dispositif d'entraînement motorisé 5 est commandé par une unité de commande. L'unité de commande peut être, par exemple, une unité de commande locale 12, où l'unité de commande locale 12 peut être reliée en liaison filaire ou non filaire avec une unité de commande centrale 13. L'unité de commande centrale 13 pilote l'unité de commande locale 12, ainsi que d'autres unités de commande locales similaires et réparties dans le bâtiment.

L'unité de commande centrale 13 peut être en communication avec une station météorologique déportée à l'extérieur du bâtiment, incluant, notamment, un ou plusieurs capteurs pouvant être configurés pour déterminer, par exemple, une température, une luminosité, ou encore une vitesse de vent.

Une télécommande 14, pouvant être un type d'unité de commande locale, et pourvue d'un clavier de commande, qui comprend des éléments de sélection et d'affichage, permet, en outre, à un utilisateur d'intervenir sur l'actionneur électromécanique 11 et/ou l'unité de commande centrale 13.

Le dispositif d'entraînement motorisé 5 est, de préférence, configuré pour exécuter les commandes de déroulement ou d'enroulement de l'écran 2 du dispositif d'occultation 3, pouvant être émises, notamment, par la télécommande 14.

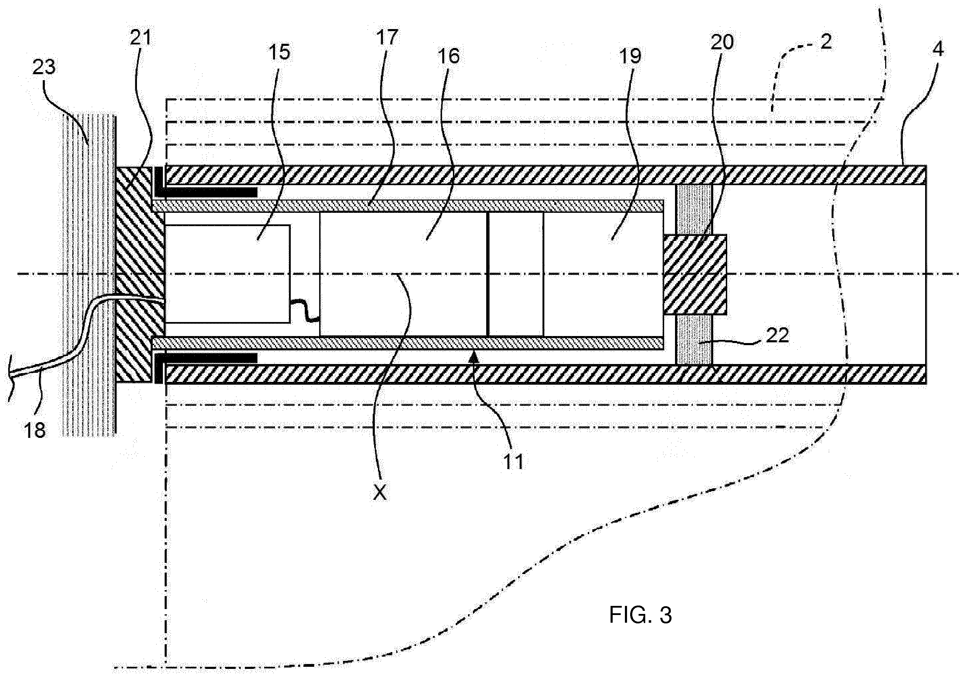

On va décrire à présent, plus en détail et en référence à la figure 3, l'actionneur électromécanique 11 appartenant à l'installation domotique des figures 1 et 2.

L'actionneur électromécanique 11 comprend un moteur électrique 16. Le moteur électrique 16 comprend un rotor et un stator, non représentés et positionnés de manière coaxiale autour d'un axe de rotation X, qui est également l'axe de rotation du tube d'enroulement 4 en configuration montée du dispositif d'entraînement motorisé 5.

Des moyens de commande de l'actionneur électromécanique 11, permettant le déplacement de l'écran 2 du dispositif d'occultation 3, comprennent au moins une unité électronique de contrôle 15. Cette unité électronique de contrôle 15 est apte à mettre en fonctionnement le moteur électrique 16 de l'actionneur électromécanique 11, et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

L'unité électronique de contrôle 15 comprend également un module de réception d'ordres, en particulier d'ordres radioélectriques émis par un émetteur d'ordres, tel que la télécommande 14 destinée à commander l'actionneur électromécanique 11 ou l'une des unités de commande locale 12 ou centrale 13.

Le module de réception d'ordres peut également permettre la réception d'ordres transmis par des moyens filaires.

Ici, et tel qu'illustré à la figure 3, l'unité électronique de contrôle 15 est disposée à l'intérieur d'un carter 17 de l'actionneur électromécanique 11.

Les moyens de commande de l'actionneur électromécanique 11 comprennent des moyens matériels et/ou logiciels.

A titre d'exemple nullement limitatif, les moyens matériels peuvent comprendre au moins un microcontrôleur.

L'actionneur électromécanique 11 est alimenté en énergie électrique par un réseau d'alimentation électrique du secteur, ou encore au moyen d'une batterie, pouvant être rechargée, par exemple, par un panneau photovoltaïque. L'actionneur électromécanique 11 permet de déplacer l'écran 2 du dispositif d'occultation 3.

Ici, l'actionneur électromécanique 11 comprend un câble d'alimentation électrique 18 permettant son alimentation en énergie électrique depuis le réseau d'alimentation électrique du secteur.

Le carter 17 de l'actionneur électromécanique 11 est, préférentiellement, de forme cylindrique.

Dans un mode de réalisation, le carter 17 est réalisé dans un matériau métallique.

La matière du carter de l'actionneur électromécanique n'est nullement limitative et peut être différente et, en particulier, en matière plastique.

L'actionneur électromécanique 11 comprend également un dispositif de réduction à engrenages 19 et un arbre de sortie 20.

L'actionneur électromécanique 11 peut également comprendre un dispositif de détection de fin de course et/ou d'obstacle, pouvant être mécanique ou électronique.

Avantageusement, le moteur électrique 16 et le dispositif de réduction à engrenages 19 sont disposés à l'intérieur du carter 17 de l'actionneur électromécanique 11.

L'arbre de sortie 20 de l'actionneur électromécanique 11 est disposé à l'intérieur du tube d'enroulement 4, et au moins en partie à l'extérieur du carter 17 de l'actionneur électromécanique 11.

L'arbre de sortie 20 de l'actionneur électromécanique 11 est accouplé, par un élément de liaison 22, au tube d'enroulement 4, en particulier un élément de liaison en forme de roue.

L'actionneur électromécanique 11 comprend également un élément d'obturation 21 d'une extrémité du carter 17.

Ici, le carter 17 de l'actionneur électromécanique 11 est fixé à un support 23, en particulier une joue, du coffre 9 du dispositif d'occultation 3 au moyen de l'élément d'obturation 21 formant un support de couple, en particulier une tête d'obturation et de reprise de couple. Dans un tel cas où l'élément d'obturation 21 forme un support de couple, l'élément d'obturation 21 est également appelé un point fixe de l'actionneur électromécanique 11.

A la figure 3, le câble d'alimentation électrique 18 et l'élément d'obturation 21 sont représentés très schématiquement, de façon fonctionnelle.

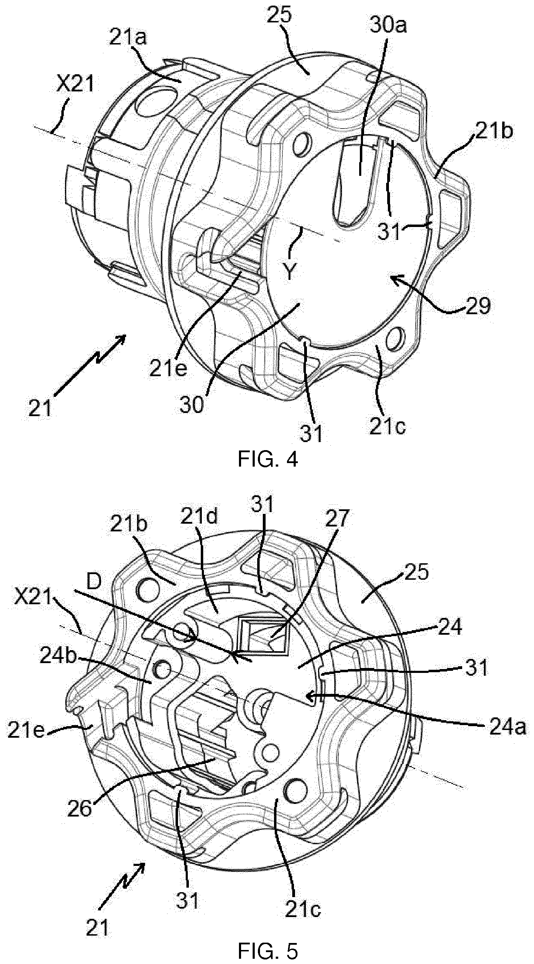

On va décrire à présent, en référence aux figures 4 à 9, l'élément d'obturation 21 et un dispositif de maintien en position d'au moins un câble de l'actionneur électromécanique tubulaire 11 illustré à la figure 3.

L'élément d'obturation 21 est disposé à une extrémité de l'actionneur électromécanique 11 opposée à celle vers laquelle l'arbre de sortie 20 fait saillie à partir du carter 17.

Avantageusement, l'élément d'obturation 21 est réalisé en matière plastique et, plus particulièrement, par moulage.

Préférentiellement, l'élément d'obturation 21 est une unique pièce, en particulier de type monobloc.

Ici, l'élément d'obturation 21 est une pièce de révolution. L'élément d'obturation 21 comprend une première partie 21a coopérant avec le carter 17 de l'actionneur électromécanique 11 et une deuxième partie 21b coopérant avec le support 23.

Au moins la première partie 21a de l'élément d'obturation 21 coopérant avec le carter 17 de l'actionneur électromécanique 11 est de forme générale cylindrique et est disposée à l'intérieur du carter 17 de l'actionneur électromécanique 11, dans la configuration assemblée de l'actionneur électromécanique 11.

Dans l'exemple de réalisation illustré aux figures 4 à 8, l'élément d'obturation 21 comprend une butée 25 coopérant avec une extrémité du carter 17 de l'actionneur électromécanique 11, de sorte à limiter l'enfoncement de la partie 21a de l'élément d'obturation 21 dans ce carter 17. La butée 25 de l'élément d'obturation 21 délimite les première et deuxième parties 21a, 21b de l'élément d'obturation 21.

Ainsi, seule la première partie 21a de l'élément d'obturation 21 est disposée à l'intérieur du carter 17 de l'actionneur électromécanique 11, suite à l'emmanchement de l'élément d'obturation 21 à l'intérieur du carter 17 jusqu'à la butée 25.

Ici, la butée 25 de l'élément d'obturation 21 est réalisée sous la forme d'une collerette, en particulier de forme cylindrique et plane.

L'élément d'obturation 21 de l'actionneur électromécanique 11 comprend un logement 24.

Ici, le logement 24 de l'élément d'obturation 21 est de forme générale cylindrique, centré sur un axe longitudinal X21 de l'élément d'obturation 21.

Ici, l'axe longitudinal X21 de l'élément d'obturation 21 est confondu avec l'axe de rotation X du moteur électrique 16 de l'actionneur électromécanique 11, ou encore l'axe de rotation du tube d'enroulement 4 en configuration montée du dispositif d'entraînement motorisé 5.

Avantageusement, le logement 24 de l'élément d'obturation 21 s'étend depuis une face frontale 21c de l'élément d'obturation 21, en particulier une face d'extrémité de la deuxième partie 21b de l'élément d'obturation 21, jusqu'à une paroi de fond 24a du logement 24.

Avantageusement, au moins un connecteur électrique 26, 27 est disposé à l'intérieur de l'élément d'obturation 21 et, plus particulièrement, logé à l'intérieur de l'élément d'obturation 21 à partir de la paroi de fond 24a du logement 24 de l'élément d'obturation 21, c'est-à-dire ménagé à l'intérieur de la première partie 21a de l'élément d'obturation 21 et débouchant dans le logement 24 de l'élément d'obturation 21 au niveau de la paroi de fond 24a du logement 24.

En outre, le ou chaque connecteur électrique 26, 27 est relié à l'unité électronique de contrôle 15 de l'actionneur électromécanique 11, au moyen d'éléments de connexion électrique, tels qu'un câble électrique 32, et/ou des broches électriques, non représentées, coopérant avec des pistes d'une carte électronique de l'unité électronique de contrôle 15. Ces éléments de connexion électrique sont disposés entre le ou chaque connecteur électrique 26, 27 et l'unité électronique de contrôle 15 de l'actionneur électromécanique 11, en particulier à l'intérieur de la première partie 21a de l'élément d'obturation 21.

Ici, un premier connecteur électrique 26 et un deuxième connecteur électrique 27 sont disposés à l'intérieur de l'élément d'obturation 21 et, plus particulièrement, logés à l'intérieur de l'élément d'obturation 21 à partir de la paroi de fond 24 du logement 24 de l'élément d'obturation 21, c'est-à-dire ménagés à l'intérieur de la première partie 21a de l'élément d'obturation 21 et débouchant dans le logement 24 de l'élément d'obturation 21 au niveau de la paroi de fond 24a du logement 24.

Le premier connecteur électrique 26 de l'élément d'obturation 21 est relié au câble d'alimentation électrique 18 de l'actionneur électromécanique 11.

En outre, le premier connecteur électrique 26 de l'élément d'obturation 21 est relié électriquement au moteur électrique 16 de l'actionneur électromécanique 11, en particulier au travers de l'unité électronique de contrôle 15 de l'actionneur électromécanique 11.

Et le deuxième connecteur électrique 27 est relié à un câble d'échange de données 28.

Ici, l'actionneur électromécanique 11 comprend le câble d'échange de données 28 permettant à l'unité électronique de contrôle 15 de l'actionneur électromécanique 11 de recevoir et/ou d'émettre des données avec une unité de commande, en particulier avec l'unité de commande locale 12 et/ou l'unité de commande centrale 13, par une liaison filaire.

Dans un mode de réalisation, le câble d'alimentation électrique 18 comprend à l'une de ses extrémités un connecteur électrique, non représenté. Ce connecteur électrique du câble d'alimentation électrique 18 coopère avec le premier connecteur électrique 26 de l'élément d'obturation 21, de sorte à alimenter le moteur électrique 16 de l'actionneur électromécanique 11 en énergie électrique, au moyen du câble d'alimentation électrique 18.

Ainsi, l'alimentation en énergie électrique du moteur électrique 16 de l'actionneur électromécanique 11 est mise en oeuvre par l'accouplement du connecteur électrique du câble d'alimentation électrique 18 avec le premier connecteur électrique 26 de l'élément d'obturation 21 relié électriquement à l'unité électronique de contrôle 15.

Par ailleurs, le câble d'échange de données 28 comprend à l'une de ses extrémités un connecteur électrique, non représenté. Et le connecteur électrique du câble d'échange de données 28 coopère avec le deuxième connecteur électrique 27 de l'élément d'obturation 21, de sorte à échanger des données entre au moins l'une des unités de commande 12, 13 et l'unité électronique de contrôle 15 de l'actionneur électromécanique 11.

Ainsi, la communication entre l'une des unités de commande 12, 13 et l'unité électronique de contrôle 15 de l'actionneur électromécanique 11 est mise en oeuvre par l'accouplement du connecteur électrique du câble d'échange de données 28 avec le deuxième connecteur électrique 27 de l'élément d'obturation 21 relié électriquement à l'unité électronique de contrôle 15.

Au moins une partie du ou de chaque câble 18, 28 est disposée à l'intérieur du logement 24 de l'élément d'obturation 21.

Ici, une partie du câble d'alimentation électrique 18 et une partie du câble d'échange de données 28 sont disposées à l'intérieur du logement 24 de l'élément d'obturation 21.

Dans un mode de réalisation, non représenté, le logement 24 de l'élément d'obturation 21 comprend des éléments de maintien du ou de chaque câble 18, 28.

Ainsi, le ou chaque câble 18, 28 est maintenu à l'intérieur du logement 24 de l'élément d'obturation 21 par des éléments de maintien formant un chemin de passage à l'intérieur du logement 24.

De cette manière, les éléments de maintien ménagés à l'intérieur du logement 24 de l'élément d'obturation 21 permettent de garantir une résistance à un effort d'arrachement du ou de chaque câble 18, 28.

L'élément d'obturation 21 de l'actionneur électromécanique 11 comprend un dispositif de maintien en position 29, par rapport à l'élément d'obturation 21, du ou de chaque câble 18, 28, en particulier du câble d'alimentation électrique 18 et du câble d'échange de données 28.

Le dispositif de maintien en position 29 comprend un élément rotatif 30 monté à l'intérieur du logement 24 de l'élément d'obturation 21, de sorte à maintenir en position le ou chaque câble 18, 28, en particulier le câble d'alimentation électrique 18 et le câble d'échange de données 28, dans le logement 24 de l'élément d'obturation 21, suite à un mouvement de rotation de l'élément rotatif 30 à l'intérieur du logement 24 autour d'un axe de rotation Y.

L'axe de rotation Y de l'élément rotatif 30 est confondu avec l'axe longitudinal X21 de l'élément d'obturation 21. En variante, les axes X21, Y sont parallèles mais non confondus.

Ainsi, l'élément rotatif 30 du dispositif de maintien en position 29 monté à l'intérieur du logement 24 de l'élément d'obturation 21 permet de maintenir en position un ou plusieurs câbles 18, 28 de section quelconque passant au travers du logement 24 de l'élément d'obturation 21 de l'actionneur électromécanique tubulaire 11.

De cette manière, l'élément d'obturation 21 présente un dispositif de maintien en position 29 compatible pour un ensemble d'actionneurs électromécaniques tubulaires 11 ayant un ou plusieurs câbles 18, 28 qui peuvent être de diamètres différents.

En outre, le maintien en position du ou de chaque câble 18, 28 au moyen de l'élément rotatif 30 monté à l'intérieur du logement 24 de l'élément d'obturation 21 permet d'éviter d'endommager ce ou ces câbles 18, 28.

Par ailleurs, l'élément d'obturation 21 peut être utilisé pour maintenir en position un ou plusieurs câbles 18, 28 de différentes sections, de sorte à standardiser l'élément d'obturation 21 pour un ensemble d'actionneurs électromécaniques tubulaires 11.

De cette manière, la gestion et l'industrialisation des actionneurs électromécaniques tubulaires 11 par un fabricant sont simplifiées et moins onéreuses.

Un tel dispositif de maintien en position 29 disposé dans l'élément d'obturation 21 de l'actionneur électromécanique 11 permet de maintenir en position différents types de câbles 18, 28, pouvant être de sections différentes et/ou destinés à un usage différent, tel que l'alimentation en énergie électrique ou la communication de données.

De cette manière, le dispositif de maintien en position 29 est adapté à un ensemble de références d'actionneurs électromécaniques tubulaires 11.

Par ailleurs, un tel dispositif de maintien en position 29 permet de garantir un aspect esthétique de l'élément d'obturation 21 de l'actionneur électromécanique 11.

En pratique, l'élément d'obturation 21, en particulier la deuxième partie 21b de l'élément d'obturation 21, comprend une paroi latérale 21d formant le logement 24 à l'intérieur duquel est disposé l'élément rotatif 30.

Ici, la paroi latérale 21d de l'élément d'obturation 21 présente une face externe sur laquelle des formes en relief, plus précisément des cannelures, sont ménagées, de sorte à coopérer avec le support 23.

Ainsi, la fixation de l'élément d'obturation 21 de l'actionneur électromécanique 11 sur le support 23 est mise en oeuvre par l'emboîtement de formes complémentaires, en particulier des cannelures dans des logements correspondants du support 23.

Les formes en relief de la face externe de la paroi latérale 21d de l'élément d'obturation 21 ne sont nullement limitatives et peuvent être différentes, notamment de section carré ou triangulaire.

En variante, la paroi latérale 21d de l'élément d'obturation 21 peut présenter une face externe lisse, en particulier de section circulaire.

Avantageusement, l'élément rotatif 30 est monté dans le logement 24 de l'élément d'obturation 21 au moyen d'éléments de fixation par encliquetage élastique 31.

Ici, les éléments de fixation par encliquetage élastique 31 appartiennent au dispositif de maintien en position 29.

Ainsi, la fixation de l'élément rotatif 30 à l'intérieur du logement 24 de l'élément d'obturation 21 est mise en oeuvre de manière simple et peu onéreuse.

En outre, la fixation par encliquetage élastique de l'élément rotatif 30 à l'intérieur du logement 24 de l'élément d'obturation 21 permet de pouvoir retirer l'élément rotatif 30 du logement 24 de l'élément d'obturation 21, notamment avant l'insertion d'au moins un câble 18, 28 dans le logement 24 de l'élément d'obturation 21 et, plus particulièrement, avant d'enficher un connecteur électrique dudit au moins un câble 18, 28 dans un connecteur électrique 26, 27 disposé à l'intérieur de l'élément d'obturation 21.

Ici, les éléments de fixation par encliquetage élastique 31 sont ménagés à partir de la paroi latérale 21d de l'élément d'obturation 21 formant le logement 24 de l'élément d'obturation 21.

Ainsi, les éléments de fixation par encliquetage élastique 31 s'étendent depuis la paroi latérale 21d de l'élément d'obturation 21 vers la partie centrale du logement 24 de l'élément d'obturation 21 et, plus particulièrement, vers l'axe longitudinal X21 de l'élément d'obturation 21 et vers l'axe de rotation Y de l'élément rotatif 30 à l'intérieur du logement 24.

Dans l'exemple de réalisation illustré aux figures 4 à 8, les éléments de fixation par encliquetage élastique 31 de l'élément rotatif 30 à l'intérieur du logement 24 de l'élément d'obturation 21 sont des languettes.

En pratique, l'élément rotatif 30 du dispositif de maintien en position 29 dudit au moins un câble 18, 28 est positionné à l'intérieur du logement 24 de l'élément d'obturation 21 par la mise en appui d'une paroi 30b de l'élément rotatif 30 contre une butée 24b du logement 24 de l'élément d'obturation 21.

Ici, la butée 24b du logement 24 de l'élément d'obturation 21 est réalisée par une paroi s'étendant à partir de la paroi latérale 21d de l'élément d'obturation 21. Comme illustré à la figure 5, la paroi formant la butée 24b du logement 24 s'étend parallèlement à la paroi de fond 24a du logement 24.

En outre, la butée 24b du logement 24 de l'élément d'obturation 21 est ménagée à l'intérieur du logement 24 et à une distance D, non nulle, à partir de la paroi de fond 24a du logement 24 de l'élément d'obturation 21.

Par ailleurs, l'élément rotatif 30 est maintenu en position entre les éléments de fixation par encliquetage élastique 31 et la butée 24b ménagée à l'intérieur du logement 24 de l'élément d'obturation 21.

Préférentiellement, l'élément rotatif 30 est monté libre en rotation, autour de son axe de rotation Y, à l'intérieur du logement 24 de l'élément d'obturation 21.

Ainsi, l'élément rotatif 30 peut être déplacé à l'intérieur du logement 24 de l'élément d'obturation 21 suivant un mouvement de rotation autour de l'axe de rotation Y.

De cette manière, la rotation de l'élément rotatif 30 à l'intérieur du logement 24 de l'élément d'obturation 21 peut être mise en oeuvre en exerçant un effort de faible intensité, en particulier par un doigt de l'utilisateur.

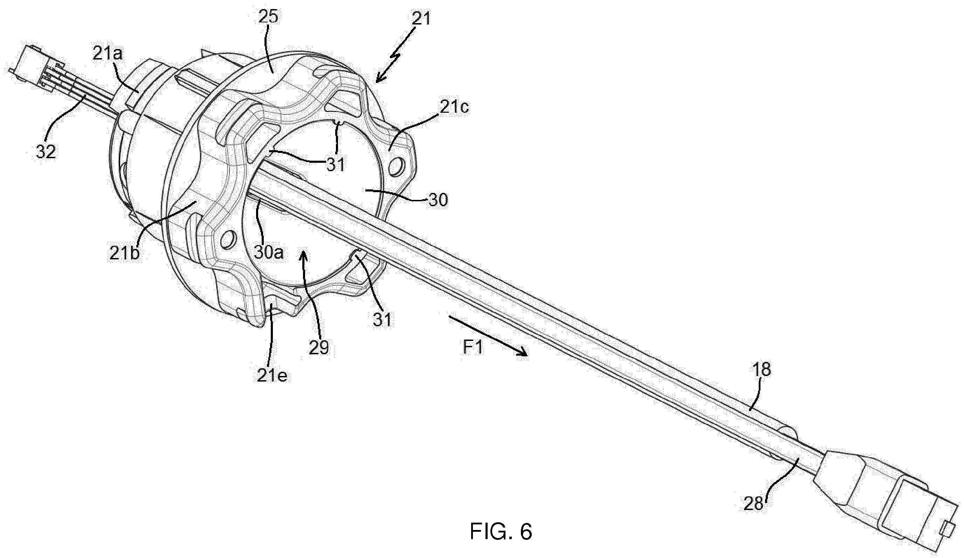

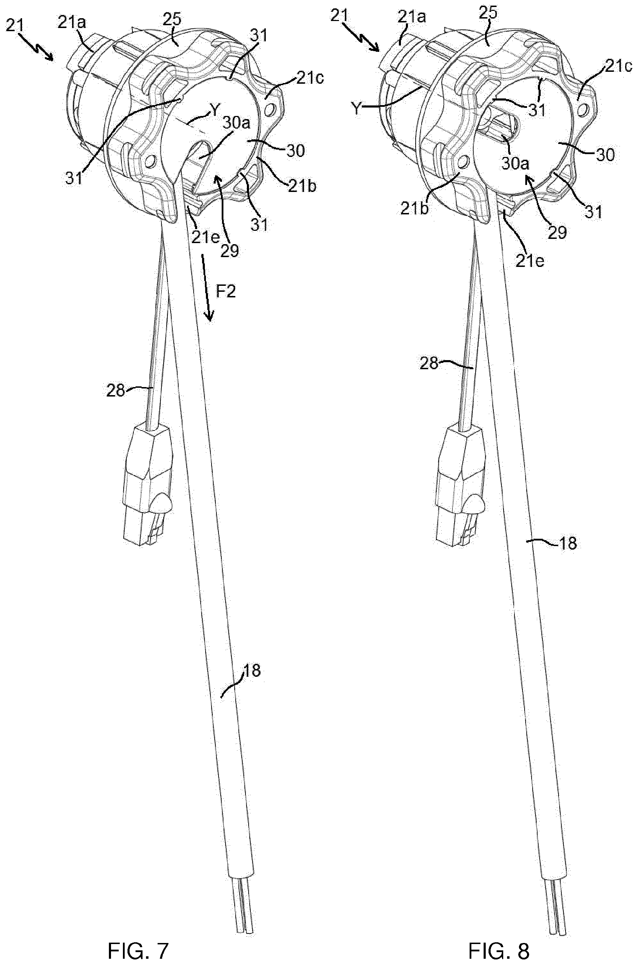

Avantageusement, l'élément rotatif 30 est de forme cylindrique et comprend une fente de passage 30a du ou de chaque câble 18, 28, de sorte à permettre une première sortie du ou de chaque câble 18, 28 selon une direction axiale, tel qu'illustré par la flèche F1 à la figure 6, par rapport à l'axe longitudinal X21 de l'élément d'obturation 21 au moyen de la fente de passage 30a. La forme de l'élément rotatif 30 est également compatible avec une deuxième sortie du ou de chaque câble 18, 28 selon une direction radiale, tel qu'illustré par la flèche F2 à la figure 7, par rapport à l'axe longitudinal X21 de l'élément d'obturation 21.

Ainsi, l'élément rotatif 30 du dispositif de maintien en position 29 permet de maintenir en position le ou les câbles 18, 28, soit selon une direction axiale, soit selon une direction radiale par rapport à l'axe longitudinal X21 de l'élément d'obturation 21, en fonction de l'assemblage de l'actionneur électromécanique 11 sur le support 23.

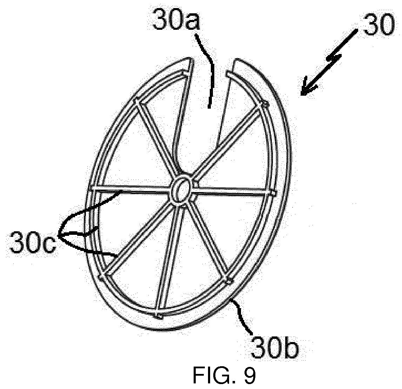

En pratique, la fente de passage 30a ménagée dans l'élément rotatif 30 débouche, d'une part, sur le contour circulaire de l'élément rotatif 30 et, d'autre part, sur les deux faces parallèles de l'élément rotatif 30, c'est-à-dire de part et d'autre de la paroi 30b visible à la figure 9.

Ainsi, la fente de passage 30a s'étend depuis le bord de l'élément rotatif 30 vers le centre de celui-ci.

De cette manière, le ou les câbles 18, 28 peuvent être placés dans la fente de passage 30a de l'élément rotatif 30, en particulier lorsque le ou les câbles 18, 28 sont disposés selon la première sortie, c'est-à-dire selon la direction axiale, tel qu'illustré par la flèche F1, par rapport à l'axe longitudinal X21 de l'élément d'obturation 21.

Avantageusement, lorsque le ou chaque câble 18, 28 est disposé selon la première sortie, c'est-à-dire selon la direction axiale F1 par rapport à l'axe longitudinal X21 de l'élément d'obturation 21, comme illustré à la figure 6, l'élément rotatif 30 est déplaçable, autrement dit configuré pour être déplacé, d'une première position angulaire, par rapport à l'axe de rotation Y, où le bord de la fente de passage 30a n'exerce aucune pression sur le ou chaque câble 18, 28, vers une deuxième position angulaire, par rapport l'axe de rotation Y, où une partie du bord de la fente de passage 30a exerce une pression sur le ou chaque câble 18, 28.

Ainsi, lorsque le ou chaque câble 18, 28 est disposé selon la première sortie, ce ou ces câbles 18, 28 sont maintenus en position par l'élément rotatif 30.

De cette manière, le ou chaque câble 18, 28 est maintenu en position par la mise en appui d'une partie du bord de la fente de passage 30a de l'élément rotatif 30, suite à un mouvement de rotation de l'élément rotatif 30 à l'intérieur du logement 24 de l'élément d'obturation 21.

Préférentiellement, la paroi 21d de l'élément d'obturation 21, en particulier la paroi latérale 21d de la deuxième partie 21b de l'élément d'obturation 21, comprend une ouverture de passage 21e du ou de chaque câble 18, 28, de sorte à permettre la deuxième sortie dudit au moins un câble 18, 28 selon une direction radiale F2 par rapport à l'axe longitudinal X21 de l'élément d'obturation 21.

Ainsi, l'ouverture de passage 21e ménagée dans la paroi latérale 21d de l'élément d'obturation 21 s'étend depuis le logement 24 de l'élément d'obturation 21 vers l'extérieur de l'élément d'obturation 21, suivant une direction radiale F2 par rapport à l'axe longitudinal X21 de l'élément d'obturation 21.

De cette manière, le ou les câbles 18, 28 peuvent être placés dans l'ouverture de passage 21e de la paroi latérale 21d de l'élément d'obturation 21, lorsque le ou les câbles 18, 28 sont disposés selon la deuxième sortie, c'est-à-dire selon la direction radiale, tel qu'illustré par la flèche F2 à la figure 7, par rapport à l'axe longitudinal X21 de l'élément d'obturation 21.

Préférentiellement, lorsque le ou chaque câble 18, 28 est disposé selon la deuxième sortie, c'est-à-dire selon la direction radiale F2 par rapport à l'axe longitudinal X21 de l'élément d'obturation 21, l'élément rotatif 30 est déplaçable, autrement dit configuré pour être déplacé, d'une troisième position angulaire, par rapport à l'axe de rotation Y, où la fente de passage 30a ménagée dans l'élément rotatif 30 est alignée avec l'ouverture de passage 21e ménagée dans la paroi latérale 21d de l'élément d'obturation 21, tel qu'illustré à la figure 7, vers une quatrième position angulaire, par rapport à l'axe de rotation Y, où la fente de passage 30a est décalée angulairement autour des axes X21, Y par rapport à l'ouverture de passage 21e, tel qu'illustré à la figure 8.

Ainsi, lorsque le ou chaque câble 18, 28 est disposé selon la deuxième sortie, ce ou ces câbles 18, 28 sont maintenus en position par l'élément rotatif 30 et bloqués à l'intérieur de l'ouverture de passage 21e par l'élément rotatif 30.

De cette manière, le ou chaque câble 18, 28 est maintenu en position à l'intérieur de l'ouverture de passage 21e ménagée dans la paroi latérale 21d de l'élément d'obturation 21 au moyen de la paroi 30b de l'élément rotatif 30, suite au mouvement de rotation de l'élément rotatif 30 à l'intérieur du logement 24 de l'élément d'obturation 21, de la troisième position angulaire vers la quatrième position angulaire.

En pratique, lorsque le ou chaque câble 18, 28 est disposé selon la deuxième sortie, la quatrième position angulaire de l'élément rotatif 30 correspond à une position de l'élément rotatif 30 où l'ouverture de passage 21e est obstruée par l'élément rotatif 30, autrement dit recouverte par la paroi formant l'élément rotatif 30, en particulier selon un plan orthogonal à l'axe de rotation Y.

Ici, les première et deuxième positions angulaires de l'élément rotatif 30, lorsque le ou chaque câble 18, 28 est positionné selon la première sortie, sont différentes des troisième et quatrième positions angulaires de l'élément rotatif 30, lorsque le ou chaque câble 18, 28 est positionné selon la deuxième sortie.

La fente de passage 30a et l'ouverture de passage 21e permettent respectivement la première sortie du ou de chaque câble 18, 28 selon une direction axiale, tel qu'illustré par la flèche F1, par rapport à l'axe longitudinal X21 de l'élément d'obturation 21 et la deuxième sortie du ou de chaque câble 18, 28 selon une direction radiale, tel qu'illustré par la flèche F2, par rapport à l'axe longitudinal X21 de l'élément d'obturation 21.

Ainsi, la première sortie, c'est-à-dire selon la direction axiale F1 par rapport à l'axe longitudinal X21 de l'élément d'obturation 21, comme illustré à la figure 6, et la deuxième sortie, c'est-à-dire selon la direction radiale F2 par rapport à l'axe longitudinal X21 de l'élément d'obturation 21, comme illustré aux figures 7 et 8, sont mises en oeuvre de manière simple au moyen de l'élément rotatif 30 disposé à l'intérieur du logement 24 de l'élément d'obturation 21 et, plus particulièrement, par la rotation de celui-ci autour de l'axe de rotation Y.

En outre, la rotation de l'élément rotatif 30 disposé à l'intérieur du logement 24 de l'élément d'obturation 21 permet de garantir le maintien en position du ou de chaque câble 18, 28, d'une part, selon la première sortie, c'est-à-dire selon la direction axiale F1 et, d'autre part, selon la deuxième sortie, c'est-à-dire selon la direction radiale F2.

Dans le cas où le ou chaque câble 18, 28 est disposé selon la première sortie, c'est-à-dire selon la direction axiale F1, comme illustré à la figure 6, ce ou ces câbles 18, 28 traversent la fente de passage 30a de l'élément rotatif 30 qui les guide et les maintient en position.

En outre, la rotation de l'élément rotatif 30 autour de l'axe de rotation Y, entre la première position angulaire et la deuxième position angulaire, garantit le maintien en position du ou de chaque câble 18, 28 selon la direction axiale F1 par rapport à l'axe longitudinal X21 de l'élément d'obturation 21, de sorte à empêcher le déplacement de ce ou ces câbles18, 28 vers la deuxième sortie, c'est-à-dire selon la direction radiale F2 par rapport à l'axe longitudinal X21 de l'élément d'obturation 21.

Dans le cas où le ou chaque câble 18, 28 est disposé selon la deuxième sortie, c'est-à-dire selon la direction radiale F2 par rapport à l'axe longitudinal X21 de l'élément d'obturation 21, comme illustré aux figures 7 et 8, ce ou ces câbles 18, 28 traversent l'ouverture de passage 21e de la paroi latérale 21d de l'élément d'obturation 21.

En outre, la rotation de l'élément rotatif 30 autour de l'axe de rotation Y, entre la troisième position angulaire et la quatrième position angulaire, garantit le maintien en position du ou de chaque câble 18, 28 selon la direction radiale F2.

Afin de modifier la direction du ou de chaque câble 18, 28 de la première sortie vers la deuxième sortie, l'élément rotatif 30 est déplacé en rotation autour de l'axe de rotation Y jusqu'à l'alignement de la fente de passage 30a ménagée dans l'élément rotatif 30 avec l'ouverture de passage 21e ménagée dans la paroi latérale 21d de l'élément d'obturation 21. Puis, le ou chaque câble 18, 28 est positionné à l'intérieur de l'ouverture de passage 21e. Enfin, le ou chaque câble 18, 28 est maintenu en position à l'intérieur de l'ouverture de passage 21e en déplaçant en rotation l'élément rotatif 30 autour de l'axe de rotation Y jusqu'à une position où la fente de passage 30a ménagée dans l'élément rotatif 30 est décalée, angulairement autour des axes X21, Y, par rapport à l'ouverture de passage 21e.

Les opérations décrites précédemment pour modifier la direction du ou de chaque câble 18, 28 de la première sortie vers la deuxième sortie sont mises en oeuvre par l'installateur de l'installation domotique.

Dans le mode de réalisation illustré à la figure 9, l'élément rotatif 30 comprend des raidisseurs 30c.

Ainsi, les raidisseurs 30c de l'élément rotatif 30 permettent de rigidifier l'élément rotatif 30, de sorte à garantir la libre rotation de l'élément rotatif 30 à l'intérieur du logement 24 de l'élément d'obturation 21, en particulier entre les éléments de fixation par encliquetage élastique 31 et la butée 24b ménagée à l'intérieur du logement 24 de l'élément d'obturation 21.

Ici, les raidisseurs 30c de l'élément rotatif 30 sont réalisés par des nervures radiales ménagées sur une face arrière de la paroi 30b.

En variante, les raidisseurs 30c de l'élément rotatif 30 peuvent être mis en oeuvre au moyen d'une marche réalisée sur le contour de l'élément rotatif 30. La marche de l'élément rotatif 30 correspond à une paroi reliant un rebord de l'élément rotatif 30 au corps de l'élément rotatif 30, de sorte à réaliser un décalage axial entre un plan passant par le rebord de l'élément rotatif 30 et un plan passant par le corps de l'élément rotatif 30.

Dans un mode de réalisation, non représenté, l'élément rotatif 30 peut comprendre une ou plusieurs butées coopérant avec un élément du logement 24 de l'élément d'obturation 21, en particulier avec une forme de la face interne de la paroi latérale 21d formant le logement 24, de sorte à limiter la rotation de l'élément rotatif 30 à l'intérieur du logement 24.

La ou les butées de l'élément rotatif 30 peuvent être réalisées sous forme de pions, s'étendant en particulier à partir de la face interne de la paroi de l'élément rotatif 30 tournée vers l'intérieur du logement 24 de l'élément d'obturation 21, dans la configuration assemblée de l'actionneur électromécanique 11.

Par ailleurs, la ou les butées de l'élément rotatif 30 peuvent coopérer, respectivement, avec un trou ménagé dans la paroi latérale 21d de l'élément d'obturation 21, de sorte à bloquer la rotation de l'élément rotatif 30 à l'intérieur du logement 24 de l'élément d'obturation 21, en particulier pour des actionneurs électromécaniques tubulaires ne pouvant être montés sur le support 23 qu'avec le ou chaque câble 18, 28 disposé selon la deuxième sortie, c'est-à-dire selon la direction radiale F2 par rapport à l'axe longitudinal X21 de l'élément d'obturation 21.

Grâce à la présente invention, l'élément rotatif du dispositif de maintien en position du ou des câble(s) monté(s) à l'intérieur du logement de l'élément d'obturation permet de maintenir en position un ou plusieurs câbles de section quelconque passant au travers du logement de l'élément d'obturation de l'actionneur électromécanique tubulaire.

De cette manière, l'élément d'obturation présente un dispositif de maintien en position d'au moins un câble compatible pour un ensemble d'actionneurs électromécaniques tubulaires ayant un ou plusieurs câbles et pouvant être de diamètres différents.

La présente invention permet également par le maintien en position dudit au moins un câble au moyen de l'élément rotatif monté à l'intérieur du logement de l'élément d'obturation d'éviter d'endommager ledit au moins un câble.

Bien entendu, de nombreuses modifications peuvent être apportées aux exemples de réalisation décrits précédemment sans sortir du cadre de l'invention défini par les revendications.

En outre, les modes de réalisation et variantes envisagés peuvent être combinés pour générer de nouveaux modes de réalisation de l'invention.

## Revendications

1. Actionneur électromécanique tubulaire (11) pour une installation domotique de fermeture ou de protection solaire comprenant :
- un carter (17),
- un moteur électrique (16),
- un élément d'obturation (21) d'une extrémité du carter (17),
- au moins un câble (18, 28),
où l'élément d'obturation (21) comprend :
o un logement (24),
o un dispositif de maintien en position (29) dudit au moins un câble (18, 28),
où au moins une partie dudit au moins un câble (18, 28) est disposée à l'intérieur du logement (24) de l'élément d'obturation (21),
où le dispositif de maintien en position (29) dudit au moins un câble (18, 28) comprend un élément rotatif (30) monté à l'intérieur du logement (24) de l'élément d'obturation (21), de sorte à maintenir en position ledit au moins un câble (18, 28) dans le logement (24) de l'élément d'obturation (21), suite à un mouvement de rotation de l'élément rotatif (30) à l'intérieur du logement (24) de l'élément d'obturation (21) autour d'un axe de rotation (Y), l'axe de rotation (Y) de l'élément rotatif (30) étant parallèle ou confondu avec un axe longitudinal (X21) de l'élément d'obturation (21),
**caractérisé en ce que** l'élément rotatif (30) est de forme cylindrique et comprend une fente de passage (30a), de sorte à permettre une première sortie dudit au moins un câble (18, 28) selon une direction axiale (F1) par rapport à l'axe longitudinal (X21) de l'élément d'obturation (21) au moyen de la fente de passage (30a) et une deuxième sortie dudit au moins un câble (18, 28) selon une direction radiale (F2) par rapport à l'axe longitudinal (X21) de l'élément d'obturation (21).

2. Actionneur électromécanique tubulaire (11) pour une installation domotique de fermeture ou de protection solaire selon la revendication 1, **caractérisé en ce que** l'élément rotatif (30) est monté dans le logement (24) de l'élément d'obturation (21) au moyen d'éléments de fixation par encliquetage élastique (31).

3. Actionneur électromécanique tubulaire (11) pour une installation domotique de fermeture ou de protection solaire selon la revendication 1 ou la revendication 2, **caractérisé en ce que** l'élément rotatif (30) est monté libre en rotation, autour de son axe de rotation (Y), à l'intérieur du logement (24) de l'élément d'obturation (21).

4. Actionneur électromécanique tubulaire (11) pour une installation domotique de fermeture ou de protection solaire selon l'une quelconque des revendications 1 à 3, **caractérisé en ce que** l'élément rotatif (30) du dispositif de maintien en position (29) dudit au moins un câble (18, 28) est positionné à l'intérieur du logement (24) de l'élément d'obturation (21) par la mise en appui d'une paroi (30b) de l'élément rotatif (30) contre une butée (24b) du logement (24) de l'élément d'obturation (21).

5. Actionneur électromécanique tubulaire (11) pour une installation domotique de fermeture ou de protection solaire selon l'une quelconque des revendications 1 à 4, **caractérisé en ce que** la fente de passage (30a) ménagée dans l'élément rotatif (30) débouche, d'une part, sur le contour circulaire de l'élément rotatif (30) et, d'autre part, sur les deux faces parallèles de l'élément rotatif (30).

6. Actionneur électromécanique tubulaire (11) pour une installation domotique de fermeture ou de protection solaire selon l'une quelconque des revendications 1 à 5, **caractérisé en ce que** lorsque ledit au moins un câble (18, 28) est disposé selon la première sortie, c'est-à-dire selon la direction axiale (F1) par rapport à l'axe longitudinal (X21) de l'élément d'obturation (21), l'élément rotatif (30) est déplaçable d'une première position, où le bord de la fente de passage (30a) ménagée dans l'élément rotatif (30) n'exerce aucune pression sur ledit au moins un câble (18, 28), vers une deuxième position, où une partie du bord de la fente de passage (30a) ménagée dans l'élément rotatif (30) exerce une pression sur ledit au moins un câble (18, 28).

7. Actionneur électromécanique tubulaire (11) pour une installation domotique de fermeture ou de protection solaire selon l'une quelconque des revendications 1 à 6, **caractérisé en ce que** l'élément d'obturation (21) comprend une paroi (21d) formant le logement (24) à l'intérieur duquel est disposé l'élément rotatif (30), où la paroi (21d) de l'élément d'obturation (21) comprend une ouverture de passage (21e) dudit au moins un câble (18, 28), de sorte à permettre la deuxième sortie dudit au moins un câble (18, 28) selon une direction radiale (F2) par rapport à l'axe longitudinal (X21) de l'élément d'obturation (21).

8. Actionneur électromécanique tubulaire (11) pour une installation domotique de fermeture ou de protection solaire selon la revendication 7, **caractérisé en ce que** lorsque ledit au moins un câble (18, 28) est disposé selon la deuxième sortie, c'est-à-dire selon la direction radiale (F2) par rapport à l'axe longitudinal (X21) de l'élément d'obturation (21), l'élément rotatif (30) est déplaçable d'une troisième position, où la fente de passage (30a) ménagée dans l'élément rotatif (30) est alignée avec l'ouverture de passage (21e) ménagée dans la paroi (21d) de l'élément d'obturation (21), vers une quatrième position, où la fente de passage (30a) ménagée dans l'élément rotatif (30) est décalée angulairement autour de l'axe de rotation (Y) de l'élément rotatif (30) par rapport à l'ouverture de passage (21e) ménagée dans la paroi (21d) de l'élément d'obturation (21).

9. Installation domotique de fermeture ou de protection solaire comprenant un écran (2) enroulable sur un tube d'enroulement (4) entraîné en rotation par un actionneur électromécanique tubulaire (11), **caractérisée en ce que** l'actionneur électromécanique tubulaire (11) est conforme à l'une quelconque des revendications 1 à 8.

## Patentansprüche

1. Rohrförmiger elektromechanischer Stellantrieb (11) für eine haustechnische Schließ- oder Sonnenschutzanlage, Folgendes aufweisend:
- ein Gehäuse (17),
- einen Elektromotor (16),
- ein Verschlusselement (21) für ein Ende des Gehäuses (17),
- mindestens ein Kabel (18, 28),
wobei das Verschlusselement (21) aufweist:
o eine Aufnahme (24),
o eine Vorrichtung (29) zur Positionsaufrechterhaltung des mindestens einen Kabels (18, 28),
wobei mindestens ein Teil des mindestens einen Kabels (18, 28) im Inneren der Aufnahme (24) des Verschlusselements (21) angeordnet ist,
wobei die eine Vorrichtung (29) zur Positionsaufrechterhaltung des mindestens einen Kabels (18, 28) ein drehbewegliches Element (30) aufweist, das im Inneren der Aufnahme (24) des Verschlusselements (21) angebracht ist, um das mindestens eine Kabel (18, 28) in der Aufnahme (24) des Verschlusselements (21) im Anschluss an eine Drehbewegung des drehbeweglichen Elements (30) im Inneren der Aufnahme (24) des Verschlusselements (21) um eine Drehachse (Y) in Position zu halten, wobei die Drehachse (Y) des drehbeweglichen Elements (30) parallel zu einer Längsachse (X21) des Verschlusselements (21) ist oder mit dieser zusammenfällt,
**dadurch gekennzeichnet, dass** das drehbewegliche Element (30) von zylindrischer Form ist und einen Durchtrittsschlitz (30a) aufweist, um dem mindestens einen Kabel (18, 28) einen ersten Austritt in einer axialen Richtung (F1) in Bezug auf die Längsachse (X21) des Verschlusselements (21) mittels des Durchtrittsschlitzes (30a) und einen zweiten Austritt für das mindestens eine Kabel (18, 28) in einer radialen Richtung (F2) in Bezug auf die Längsachse (X21) des Verschlusselements (21) zu ermöglichen.

2. Rohrförmiger elektromechanischer Stellantrieb (11) nach Anspruch 1, für eine haustechnische Schließ- oder Sonnenschutzanlage, **dadurch gekennzeichnet, dass** das drehbewegliche Element (30) in der Aufnahme (24) des Verschlusselements (21) mittels elastischer Einrastbefestigungselemente (31) angebracht ist.

3. Rohrförmiger elektromechanischer Stellantrieb (11) nach Anspruch 1 oder Anspruch 2, für eine haustechnische Schließ- oder Sonnenschutzanlage, **dadurch gekennzeichnet, dass** das drehbewegliche Element (30) frei drehbeweglich um seine Drehachse (Y) Inneren der Aufnahme (24) des Verschlusselements (21) angebracht ist.

4. Rohrförmiger elektromechanischer Stellantrieb (11) nach einem der Ansprüche 1 bis 3, für eine haustechnische Schließ- oder Sonnenschutzanlage, **dadurch gekennzeichnet, dass** das drehbewegliche Element (30) der Vorrichtung (29) zur Positionsaufrechterhaltung des mindestens einen Kabels (18, 28) dadurch im Inneren der Aufnahme (24) des Verschlusselements (21) angeordnet ist, dass eine Wand (30b) des drehbeweglichen Elements (30) an einem Anschlag (24b) der Aufnahme (24) des Verschlusselements (21) in Anlage gebracht ist.

5. Rohrförmiger elektromechanischer Stellantrieb (11) nach einem der Ansprüche 1 bis 4, für eine haustechnische Schließ- oder Sonnenschutzanlage, **dadurch gekennzeichnet, dass** der im drehbeweglichen Element (30) ausgebildete Durchtrittsschlitz (30a) einerseits am kreisförmigen Umfang des drehbeweglichen Elements (30) und andererseits an den zwei parallelen Flächen des drehbeweglichen Elements (30) austritt.

6. Rohrförmiger elektromechanischer Stellantrieb (11) nach einem der Ansprüche 1 bis 5, für eine haustechnische Schließ- oder Sonnenschutzanlage, **dadurch gekennzeichnet, dass**, wenn das mindestens eine Kabel (18, 28) gemäß dem ersten Ausgang, d.h. in der axialen Richtung (F1) in Bezug auf die Längsachse (X21) des Verschlusselements (21), angeordnet ist, das drehbewegliche Element (30) von einer ersten Position, in welcher der Rand des im drehbeweglichen Element (30) ausgebildeten Durchtrittsschlitzes (30a) keinen Druck auf das mindestens eine Kabel (18, 28) ausübt, zu einer zweiten Position verschiebbar ist, in welcher ein Teil des Rands des im drehbeweglichen Element (30) ausgebildeten Durchtrittsschlitzes (30a) einen Druck auf das mindestens eine Kabel (18, 28) ausübt.

7. Rohrförmiger elektromechanischer Stellantrieb (11) nach einem der Ansprüche 1 bis 6, für eine haustechnische Schließ- oder Sonnenschutzanlage, **dadurch gekennzeichnet, dass** das Verschlusselement (21) eine Wand (21d) aufweist, welche die Aufnahme (24) bildet, in deren Innerem das drehbewegliche Element (30) angeordnet ist, wobei die Wand (21d) des Verschlusselements (21) eine Durchgangsöffnung (21e) für das mindestens eine Kabel (18, 28) aufweist, um dem mindestens einen Kabel (18, 28) den zweiten Austritt in einer radialen Richtung (F2) in Bezug auf die Längsachse (X21) des Verschlusselements (21) zu ermöglichen.

8. Rohrförmiger elektromechanischer Stellantrieb (11) nach Anspruch 7, für eine haustechnische Schließ- oder Sonnenschutzanlage, **dadurch gekennzeichnet, dass**, wenn das mindestens eine Kabel (18, 28) gemäß dem zweiten Ausgang, d.h. in der radialen Richtung (F2) in Bezug auf die Längsachse (X21) des Verschlusselements (21) angeordnet ist, das drehbewegliche Element (30) von einer dritten Position, in welcher der im drehbeweglichen Element (30) ausgebildete Durchtrittsschlitz (30a) mit der in der Wand (21d) des Verschlusselements (21) ausgebildeten Durchgangsöffnung (21e) ausgerichtet ist, zu einer vierten Position verschiebbar ist, in welcher der im drehbeweglichen Element (30) ausgebildete Durchtrittsschlitz (30a) winkelig um die Drehachse (Y) des drehbewegliche Elements (30) in Bezug auf die in der Wand (21d) des Verschlusselements (21) ausgebildete Durchgangsöffnung (21e) versetzt ist.

9. Haustechnische Schließ- oder Sonnenschutzanlage mit einer Abschirmung (2), die auf ein durch einen rohrförmigen elektromechanischen Stellantrieb (11) drehangetriebenen Aufrollrohr (4) aufrollbar ist, **dadurch gekennzeichnet, dass** der rohrförmiger elektromechanische Stellantrieb (11) einem der Ansprüche 1 bis 8 entspricht.

## Claims

1. Tubular electromechanical actuator (11) for a home automation closing or solar protection installation comprising:
- a casing (17),
- an electric motor (16),
- a closing element (21) at one end of the casing (17),
- at least one cable (18, 28),
wherein the closing element (21) comprises:
o a housing (24),
o a device (29) for holding said at least one cable (18, 28) in position,
wherein at least one part of said at least one cable (18, 28) is disposed inside the housing (24) of the closing element (21),
wherein the device (29) for maintaining said at least one cable (18, 28) in position comprises a rotary element (30) mounted inside the housing (24) of the closing element (21), in such a way as to maintain in position said at least one cable (18, 28) in the housing (24) of the closing element (21), following a rotational movement of the rotary element (30) inside the housing (24) of the closing element (21) around an axis of rotation (Y), the axis of rotation (Y) of the rotary element (30) being parallel to or coincident with a longitudinal axis (X21) of the closing element (21),
**characterized in that** the rotary element (30) is cylindrical in shape and comprises a pass-through slot (30a), so as to allow a first exit for said at least one cable (18, 28) along an axial direction (F1) relative to the longitudinal axis (X21) of the closing element (21) by means of the pass-through slot (30a) and a second exit for said at least one cable (18, 28) along a radial direction (F2) relative to the longitudinal axis (X21) of the closing element (21).

2. Tubular electromechanical actuator (11) for a home automation closing or solar protection installation according to claim 1, **characterized in that** the rotary element (30) is mounted in the housing (24) of the closing element (21) by means of elastic snap-on attachment elements (31).

3. Tubular electromechanical actuator (11) for a home automation closing or solar protection installation according to claim 1 or claim 2, **characterized in that** the rotary element (30) is mounted in free rotation around its axis of rotation (Y) inside the housing (24) of the closing element (21).

4. Tubular electromechanical actuator (11) for a home automation closing or solar protection installation according to any one of claims 1 to 3, **characterized in that** the rotary element (30) of the device (29) for maintaining in position said at least one cable (18, 28) is positioned inside the housing (24) of the closing element (21) by pressing a wall (30b) of the rotary element (30) against a stop (24b) of the housing (24) of the closing element (21).

5. Tubular electromechanical actuator (11) for a home automation closing or solar protection installation according to any one of claims 1 to 4, **characterized in that** the pass-through slot (30a) provided in the rotary element (30) leads, on the one hand, to the circular contour of the rotary element (30), and on the other hand to the two parallel faces of the rotary element (30).

6. Tubular electromechanical actuator (11) for a home automation closing or solar protection installation according to any one of claims 1 to 5, **characterized in that** when said at least one cable (18, 28) is disposed according to the first exit, i.e. along the axial direction (F1) relative to the longitudinal axis (X21) of the closing element (21), the rotary element (30) is movable from a first position, where the edge of the pass-through slot (30a) provided in the rotary element (30) exerts no pressure on said at least one cable (18, 28), towards a second position, where part of the edge of the pass-through slot (30a) provided in the rotary element (30) exerts a pressure on said at least one cable (18, 28).

7. Tubular electromechanical actuator (11) for a home automation closing or solar protection installation according to any one of claims 1 to 6, **characterized in that** the closing element (21) comprises a wall (21d) forming the housing (24) inside which the rotary element (30) is disposed, wherein the wall (21d) of the closing element (21) comprises a through-opening (21e) for passage of said at least one cable (18, 28), so as to allow the second exit of said at least one cable (18, 28) along a radial direction (F2) relative to the longitudinal axis (X21) of the closing element (21).

8. Tubular electromechanical actuator (11) for a home automation closing or solar protection installation according to claim 7, **characterized in that** said at least one cable (18, 28) is disposed along the second exit, i.e. along the radial direction (F2) relative to the longitudinal axis (X21) of the closing element (21), the rotary element (30) is movable from a third position, wherein the pass-through slot (30a) provided in the rotary element (30) is aligned with the through-opening (21e) provided in the wall (21d) of the closing element (21), towards a fourth position, wherein the pass-through slot (30a) provided in the rotary element (30) is angularly offset around the axis of rotation (Y) of the rotary element (30) relative to the through-opening (21e) provided in the wall (21d) of the closing element (21).

9. Home automation closing or solar protection installation comprising a screen (2) that can be rolled onto a rolling tube (4) driven in rotation by a tubular electromechanical actuator (11), **characterized in that** the tubular electromechanical actuator (11) corresponds with any one of claims 1 to 8.
